Europäisches Patentamt

European Patent Office

Office européen des brevets

(19)

(11) Veröffentlichungsnummer: **0 027 511**
**B1**

(12) **EUROPÄISCHE PATENTSCHRIFT**

(45) Veröffentlichungstag der Patentschrift:
**12.06.85**

(21) Anmeldenummer: **80104737.4**

(22) Anmeldetag: **11.08.80**

(51) Int. Cl.⁴: **H 04 B 3/44**

(54) Verfahren und Schaltungsanordnung zur Inbetriebnahme der beidseitigen Fernspeisung von Zwischenstellen einer Nachrichtenübertragungsstrecke.

(30) Priorität: **17.08.79 DE 2933439**

(43) Veröffentlichungstag der Anmeldung:
**29.04.81 Patentblatt 81/17**

(45) Bekanntmachung des Hinweises auf die Patenterteilung:
**12.06.85 Patentblatt 85/24**

(84) Benannte Vertragsstaaten:
**AT BE CH DE FR GB IT LI NL SE**

(56) Entgegenhaltungen:
**DE - B - 1 762 703**
**DE - B - 1 954 579**
**GB - A - 1 453 337**
**US - A - 2 657 279**

(73) Patentinhaber: **Siemens Aktiengesellschaft, Berlin und München Wittelsbacherplatz 2, D-8000 München 2 (DE)**

(72) Erfinder: **Ziegler, Alfred, Dipl.-Ing., Laimer Platz 1, D-8000 München 21 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Verfahren zur Inbetriebnahme der beidseitigen Fernspeisung von Zwischenstellen einer Einrichtung der Nachrichtenübertragungstechnik, wobei in einem für Gleichstrom-Reihenspeisung ausgebildeten Fernspeisekreis eine Reihenschaltung von zwei, über ein Speiseadernpaar miteinander verbundenen Speiseschaltungen vorgesehen ist und eine der Speiseschaltungen eine Prüfstromquelle und die andere einen die beiden Speiseadern verbindenden Überbrückungszweig enthält, wobei bei der Inbetriebnahme der beidseitigen Fernspeisung zunächst mittels der einen Speiseschaltung ein gegenüber dem Fernspeisestrom niedrigerer Prüfstrom in das Speiseadernpaar eingespeist wird, der in der anderen Speiseschaltung über den Überbrückungszweig fliesst und ausgewertet wird und wobei die andere Speiseschaltung eine Konstantstromquelle enthält, die einen Fernspeisestrom an den Fernspeisekreis abgibt, sobald bei der örtlichen Speiseschaltung im Speiseadernpaar der Prüfstrom oder wenigstens ein vorgegebener Bruchteil des Prüfstromes festgestellt wird und wobei der Überbrückungszweig vor einer Speisung des Fernspeisekreises durch die Konstantstromquelle geschlossen und bei speisender örtlicher Konstantstromquelle geöffnet ist.

Ein derartiges Verfahren ist bereits aus der US-PS 2 657 279 bekannt. Mit Hilfe des bekannten Verfahrens wird ein Fernspeisekreis in Betrieb genommen, der mit Speisung von beiden Enden aus arbeitet und der keine Schaltzusätze zum Schliessen der Fernspeiseschleife enthält. Dabei wird von einer Speisestelle aus auch das am anderen Ende befindliche Fernspeisegerät automatisch mit eingeschaltet. Der Einschaltvorgang läuft erst nach Prüfung des Fernspeisekreises auf Fehlerfreiheit ab, so dass sich ein gewisser Personenschutz ergibt.

Es ist ferner bekannt, die Prüfung des Fernspeisekreises mit Hilfe eines tonfrequenten Signals vorzunehmen, welches nach Betätigen einer Starttaste in einer der beiden Speisestellen über den Fernspeisestrompfad zur anderen Speisestelle gesendet wird. Bei richtigem Empfang des Signals wird dort das Fernspeisegerät automatisch in Betrieb genommen.

Diese Tonfrequenz-Methode erfordert Tonfrequenzgeneratoren und -empfänger sowie Schalteinrichtungen, die als zusätzliche Geräteeinheiten neben dem Fernspeisegerät erforderlich sind.

Aufgabe der Erfindung ist es, das Verfahren der vorstehend näher bezeichneten Art derart auszubilden, dass die automatische Inbetriebnahme der beidseitigen Fernspeisung von Fernspeisekreisen, die keine Schaltzusätze zum Schliessen der Fernspeiseschleife enthalten, von jeder der beiden Seiten aus möglich ist und dabei möglichst wenig zusätzliche Einrichtungen erfordert.

Gemäss der Erfindung wird das Verfahren zur Lösung dieser Aufgabe derart ausgebildet, dass beide Speiseschaltungen jeweils eine geregelte Konstantstromquelle und jeweils einen Überbrükkungszweig enthalten und zunächst Fernspeisestrom an den eigenen Überbrückungszweig abgeben und dass daraufhin in der einen Speiseschaltung die Stromquelle vom Fernspeisestrom auf den Prüfstrom umgeschaltet und der Überbrückungszweig geöffnet werden und dass in der den Prüfstrom abgebenden Speiseschaltung vom Prüfstrom auf Fernspeisestrom umgeschaltet wird, sobald bei dieser Speiseschaltung im Speiseadernpaar wenigstens ein vorgegebener Bruchteil des von der Gegenseite kommenden Fernspeisestromes festgestellt wird und dass die Speiseschaltungen jeweils in den Überbrückungszweigen einen durch den im Fernspeisekreis fliessenden Strom steuerbaren ersten Schalter enthalten, dessen Ansprechstromwert für das Schalten wenigstens in der einen Speiseschaltung in Abhängigkeit von dem von der Stromquelle abgegebenen Strom veränderbar ist, derart, dass in einer ersten Steuerstellung der Prüfstrom den ersten Schalter öffnet und in einer zweiten Steuerstellung der Prüfstrom den ersten Schalter nicht öffnet, aber der höhere Fernspeisestrom den ersten Schalter öffnet.

Bei einem derartigen Einschaltverfahren erfolgt nach Prüfung des Fernspeisekreises mit einem konstanten Gleichstrom in ungefährlicher Höhe von z.B. 40 mA eine berührungssichere Inbetriebnahme des Fernspeisekreises. Ein weiterer Vorteil besteht darin, dass in Fernspeisegeräten bereits enthaltene Überwachungsschaltungen, mit deren Hilfe in an sich bekannter Weise bei einer durch Streckenunterbrechung verursachten unzulässigen Spannungserhöhung der Fernspeisestrom verringert und die Speisespannung auf einen ungefährlichen Wert begrenzt wird, mit wenig aufwendigen Änderungen bzw. Ergänzungen zugleich zur Inbetriebnahme der beidseitigen Fernspeisung ausnutzen lassen, so dass die Inbetriebnahme der Strecke im wesentlichen mit den Fernspeisegeräten selbst, d.h. praktisch ohne zusätzliche Einrichtung vorgenommen werden kann.

Fernspeisegeräte mit Absenkung der Speisespannung am Streckenanfang bei einer durch Streckenunterbrechung verursachten unzulässigen Spannungserhöhung sind z.B. aus der DE-PS 1 902 090 bekannt.

In Weiterbildung der Erfindung werden der Prüfstrom manuell eingestellt und die weiteren Verfahrensschritte selbsttätig ausgelöst. Zur manuellen Einstellung des Prüfstromes kann insbesondere eine im Normalbetrieb abgedeckte Start-Taste dienen.

In weiterer Ausgestaltung der Erfindung wird eine Schaltungsanordnung zur Durchführung des Verfahrens derart ausgebildet, dass wenigstens eine der Speiseschaltungen eine für den von der anderen Speisestelle kommenden Gleichstrom durchlässige Diode und in einem Überbrückungszweig einen durch den im Fernspeisekreis fliessenden Strom steuerbaren ersten Schalter enthält.

Ferner kann wenigstens bei einer der Speiseschaltungen eine Vorrichtung zur Begrenzung der Ausgangsspannung bei Einspeisung des Prüfstromes vorgesehen sein.

Vorteilhafte weitere Ausgestaltungen der Erfindung ergeben sich aus den Unteransprüchen 7 bis 10.

Die Erfindung wird anhand der in den Fig. 1 bis 5 gezeigten Ausführungsbeispiele näher erläutert.

Es zeigen:

Fig. 1 bis 4 für eine Schaltungsanordnung zur beidseitigen Fernspeisung eines Fernspeisekreises die zeitlich aufeinanderfolgenden Verfahrensschritte bei der Inbetriebnahme der beidseitigen Speisung und

Fig. 5 eine Speiseschaltung zur Durchführung des erfindungsgemässen Verfahrens.

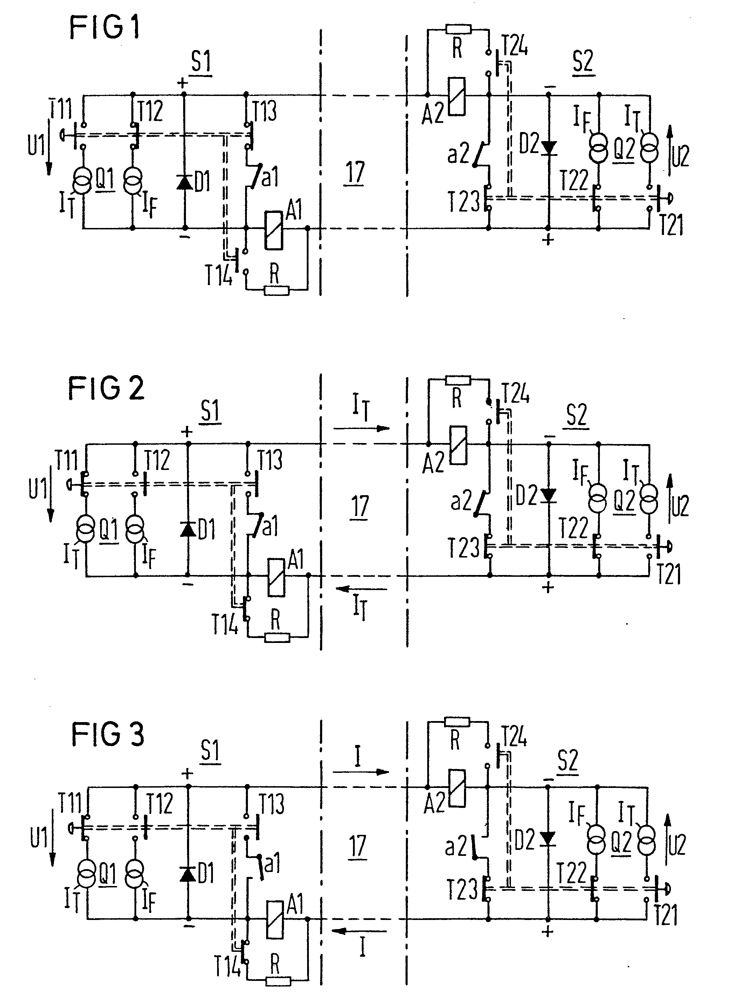

Nach Fig. 1 bis 4 enthält die Speiseschaltung S1 jeweils eine Taste mit mehreren Kontakten T11, T12, T13 und T14. Mit Hilfe der Kontakte T11 und T12 wird bei der Stromquelle Q1 wahlweise der Prüfstrom $I_T$ oder der Fernspeisestrom $I_F$ eingestellt. Der von der Stromquelle Q1 gelieferte Strom fliesst entweder über einen Überbrückungszweig, bestehend aus dem Kontakt T13 und dem dazu in Serie liegenden Ruhekontakt a1 des Relais A1, oder bei geöffnetem Überbrückungszweig über das Relais A1 in den Fernspeisekreis.

Parallel zum Überbrückungszweig T13, a1 liegt die Diode D1, die für den von der anderen Speiseschaltung kommenden Strom durchlässig ist. Der Ansprechwert des Relais A1 lässt sich mit Hilfe des Kontaktes T14 durch Parallelschalten eines Shuntes R zum Relais A1 auf etwa den halben Fernspeisestrom herabsetzen.

Die Speiseschaltung S2 ist jeweils in gleicher Weise aufgebaut. Die Bezugszeichen stimmen daher abgesehen von der ersten Ziffer, die jeweils auf die zweite Speiseschaltung hinweist, mit denen der ersten Speiseschaltung S1 überein.

Die in den Fig. 1 bis 4 dargestellten Tasten- bzw. Kontaktstellungen geben die Verfahrensschritte wieder, mit deren Hilfe durch einen Tastendruck bei der Speiseschaltung S1 eine beidseitige Speisung des Fernspeisekreises mit Fernspeisestrom $I_F$ ausgelöst wird.

Zweckmässigerweise wird die Spannung an den Ausgängen der Speiseschaltungen jeweils auf einen der Streckenlänge angepassten Wert begrenzt.

Zunächst sind beide Stromquellen Q1 und Q2 auf den Fernspeisestrom $I_F$ eingestellt, der jeweils durch den einen Kurzschluss darstellenden Überbrückungszweig T13, a1 bzw. T23, a2 fliesst. Die Relais A1 und A2 sind in Ruhelage.

Entsprechend Fig. 2 wird ausgehend von dem beschriebenen Betriebszustand in der Speiseschaltung S1 die Starttaste betätigt. Die Stromquelle Q1 wird vom Speisestrom $I_F$ auf Prüfstrom $I_T$ umgeschaltet. Gleichzeitig öffnet der Kontakt T13 den Überbrückungszweig, so dass die O-V-Reduktion aufgehoben und der Prüfstrom $I_T$ in den Fernspeisekreis eingespeist wird.

Wie aus Fig. 3 hervorgeht, spricht in der Speisestelle S2 das vom Prüfstrom durchflossene Relais A2 an, so dass der Kontakt a2 und damit der Überbrückungszweig geöffnet wird.

Der von der Stromquelle Q2 der Speiseschaltung S2 abgegebene Fernspeisestrom wird somit in den Fernspeisekreis 17 eingespeist und bewirkt, dass in der Speiseschaltung S1 das Relais A1 anspricht und der Kontakt a1 öffnet.

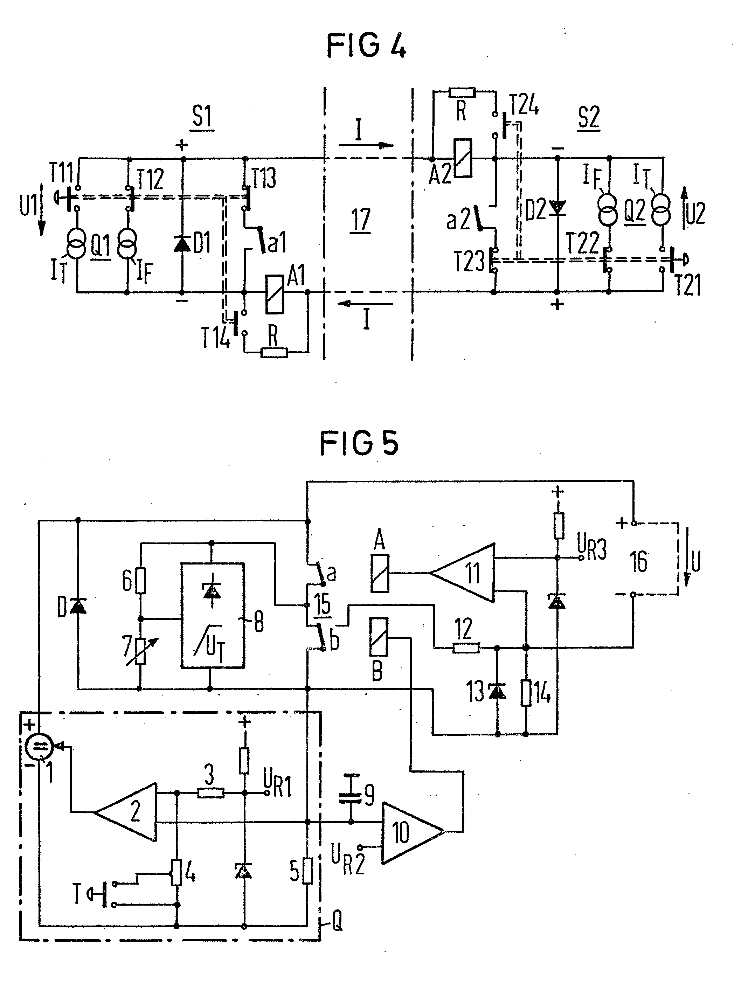

Wird nun entsprechend Fig. 4 die Taste losgelassen, so bleibt der Überbrückungszweig geöffnet. In der Speiseschaltung S1 wird nun von der Stromquelle Q1 ebenfalls Fernspeisestrom abgegeben. Die beidseitige Speisung des Fernspeisekreises ist damit in Betrieb genommen und bleibt durch die Öffnung beider Überbrückungszweige somit bestehen.

In entsprechender Weise kann die beidseitige Speisung von der Speiseschaltung S2 aus herbeigeführt werden.

Fig. 5 zeigt eine Speiseschaltung, bei der mittels der Taste T lediglich die Stromquelle 1 unmittelbar gesteuert wird und die weiteren Abläufe durch Schwellwertschalter selbsttätig ausgelöst werden.

Die Stromquelle 1 ist über den Messwiderstand 5 und den dazu in Serie geschalteten Überbrückungszweig abgeschlossen, wobei der Überbrückungszweig aus einer Serienschaltung der beiden Relaiskontakte a und b besteht. a ist ein Ruhekontakt, b ein Umschaltkontakt, der im Ruhestand den Messwiderstand 5 mit dem Relaiskontakt a verbindet und bei erregtem Relais B die Verbindung des Messwiderstandes 5 mit dem Relaiskontakt a auftrennt.

Parallel zum Überbrückungszweig 15 liegt die Diode D mit einer derartigen Polung, dass sie für den von der örtlichen Stromquelle 1 kommenden Strom gesperrt und für den von der anderen Speisestelle kommenden Strom durchlässig ist.

Parallel zum Relaiskontakt b liegt der Spannungsbegrenzer 8. Dieser Spannungsbegrenzer 8 ist bei erregtem Relais B und geschlossenem Relaiskontakt a wirksam und begrenzt in diesem Fall die am Überbrückungszweig auftretende Spannung auf einen Wert, der mit Hilfe des veränderbaren, ebenfalls parallel zum Relais b liegenden Spannungsteilers 6, 7 einstellbar ist.

Stellt man diesen Wert nur wenig über den für die Streckenprüfung erforderlichen Spannungsabfall ein, so lässt sich dadurch die Inbetriebnahme einer Strecke bei einem in Reihe liegenden Fremdwiderstand verhindern.

Der Pluspol des Ausgangsklemmenpaares 16 liegt unmittelbar am Pluspol der Stromquelle 1. Der Minuspol des Ausgangsklemmenpaares 16 ist über den Messwiderstand 14, der zur Begrenzung des Spannungsabfalls durch die Z-Diode 13 überbrückt ist, an den Verbindungspunkt des Überbrückungszweiges 15 mit dem Messwiderstand 5 verbunden und von dort über den Messwiderstand 5 an den Minuspol der Stromquelle 1 geführt.

Die Stromquelle 1 ist mit Hilfe des als Regler dienenden Differenzverstärkers 2 geregelt. Der Differenzverstärker 2 ist mit seinem einen Eingang an den Abgriff der an den Widerständen 3 und 4 bestehenden Spannungsteilers angeschlossen. Mit Hilfe dieses Spannungsteilers, der zwischen einem Anschluss für die Referenzspannung UR und dem Minuspol der Stromquelle 1 liegt, wird aus der Referenzspannung $U_{R1}$ eine Vergleichsspannung gewonnen. Mit Hilfe der Taste T lässt sich ein Teil des Widerstandes 4 kurzschliessen, so dass die als Führungsgrösse dienende Vergleichsspannung zwei Werte annehmen kann.

Der Messwiderstand 5 liegt zwischen dem anderen Eingang des Differenzverstärkers 2 und dem Minuspol der Stromquelle 1. Bei unbetätigter Taste T gibt die Stromquelle 1 einen konstanten Strom von der Grösse des für den Normalbetrieb vorgesehenen Fernspeisestromes $I_F$ ab. Bei gedrückter Taste T wird ein konstanter Prüfstrom bzw. Teststrom $I_T$ geliefert.

Der Spannungsabfall am Messwiderstand 14 steuert den als Schwellwertschalter dienenden Differenzverstärker 11, der mit seinem einen Eingang am Minuspol des Speiseklemmenpaares 16 und dessen anderer Eingang an der Referenzspannung $U_{R3}$ liegt. An den Ausgang des Differenzverstärkers 11 ist das Relais A angeschlossen.

Der Umschaltkontakt b ist als Ruhekontakt im Überbrückungszweig 15 wirksam und dient als Arbeitskontakt dazu, bei erregtem Relais B den Shunt 12 parallel zum Messwiderstand 14 zu schalten.

Werden zu beiden Seiten eines Fernspeisekreises Schaltungsanordnungen nach Fig. 5 angeschlossen, so ergibt sich für die Inbetriebnahme der beidseitigen Speisung folgender Verfahrensablauf.

Zunächst sind in beiden Speisestellen die Tasten T in Ruhelage. Der Regler 2 sorgt jeweils dafür, dass die Stromquelle 1 einen Strom abgibt, der dem bei Normalbetrieb fliessenden Fernspeisestrom $I_B$ entspricht.

Sobald in einer der beiden Speiseschaltungen die Taste T gedrückt wird, wird dem Regler 2 eine derartige Führungsgrösse zugeführt, dass die Stromquelle 1 einen verminderten Konstantstrom, nämlich den Teststrom $L_T$ an den Überbrückungszweig 15 abgibt.

Nach einer durch die Kapazität des Kondensators 9 bestimmten Verzögerungszeit wird das B-Relais erregt und der Kontakt b schaltet um. Die Verzögerung durch den Kondensator 9 ist vorgesehen, damit nicht bei der Inbetriebnahme des Gerätes, während der Hochregelung des Speisestromes auf den Sollwert, frühzeitig eine Erregung des Relais B ausgelöst wird.

In dieser Stellung des Kontaktes b ist der Überbrückungszweig 15 unterbrochen, derart dass die in Serie zum geschlossenen Relaiskontakt a der Spannungsbegrenzer 8 liegt. Es wird somit ein Teststrom in den Fernspeisekreis eingespeist und zugleich die Spannung auf einen vorgegebenen ungefährlichen Wert begrenzt.

Andererseits liegt bei erregtem Relais B der Shunt 12 parallel zum Messwiderstand 14. Bei diesem Schaltzustand wird das Relais A über den Schwellwertschalter 11 erst dann erregt, wenn der im Fernspeisekreis fliessende Strom wenigstens etwa gleich der Hälfte des Fernspeisestromes ist.

In der anderen Speisestelle ist die Taste nicht gedrückt. Der Ansprechwert des Schwellwertschalters 11 ist daher durch den Messwiderstand 14 allein bestimmt. Das Relais A wird nur dann erregt, wenn der im Fernspeisekreis fliessende Strom gleich dem Teststrom $I_T$ ist. Eine Verzögerung des Schwellwertschalters 11 stellt sicher, dass dieser während des Umschaltens des Kontaktes b nicht anspricht.

Bei fehlerfreier Strecke wird in der entfernten Speisestelle der Teststrom gemessen und das A-Relais nach einer aus Sicherheitsgründen vorgesehenen geringen Verzögerungszeit erregt. Der Kontakt a öffnet und der Fernspeisestrom $I_F$ fliesst nicht mehr über den Überbrückungszweig 15 sondern in den Fernspeisekreis.

Stellt die Speisestelle, in der die Taste T gedrückt wurde, fest, dass der im Fernspeisekreis fliessende Strom mindestens gleich dem halben Fernspeisestrom $I_F$ ist, so wird das A-Relais erregt und der a-Kontakt geöffnet. Wird nun die Taste T losgelassen, so liefert die Stromquelle 1 Fernspeisestrom $I_F$ an den Fernspeisekreis, da auch nach Abfallen des Relais B der Überbrückungszweig 16 wegen des geöffneten Kontaktes a unterbrochen ist.

Unabhängig von den Einschaltfunktionen kann man die an sich bekannten Überwachungsfunktionen beibehalten, so z.B. die Abschaltung bei Überstrom oder die Reduktion der Ausgangsspannung auf O V bei Absinken des Fernspeisestromes um einen bestimmten Betrag. Im letzteren Fall muss lediglich die Reduktions-Verzögerungszeit der Speiseschaltung S2 länger sein, als die Aufschaltezeit der Speiseschaltung S1.

Die in Fig. 5 gezeigte Speiseschaltung weist daher zweckmässigerweise folgende Eigenschaften auf:

Bei Unterstrom ($I < I_{Fsp}$) wird die Ausgangsspannung auf O V reduziert.

Die Spannungsbegrenzung bei der Test-Strom-Lieferung lässt sich auf einen von der Streckenlänge abhängigen Grenzwert einstellen. Hiermit lässt sich auch ein im Fernspeisekreis befindlicher Längs-Widerstand erkennen, was nur bei Tastendruck wirksam ist.

Aufgrund dieser Eigenschaften ergibt sich für die Überwachung der in Betrieb befindlichen Fernspeisung folgendes:

Wenn entweder durch Ausfall einer Speisestelle oder durch fehlerhafte Erhöhung des Streckenwiderstandes (Unterbrechung) der Fernspeisestrom um einen vorgegebenen Betrag absinkt, reduzieren beide Speiseschaltungen die Ausgangsspannung auf O V. Eine versuchsweise Inbetriebnahme – die nur von Hand möglich ist – würde nur den ungefährlichen Teststrom von z.B. 40 mA in die unterbrochene Strecke liefern können. Der Betrieb mit vollem Fernspeisestrom ist nur nach Prüfung des Fernspeisekreises möglich.

**Patentansprüche**

1. Verfahren zur Inbetriebnahme der beidseitigen Fernspeisung von Zwischenstellen einer Einrichtung der Nachrichtenübertragungstechnik, wobei in einem für Gleichstrom-Reihenspeisung ausgebildeten Fernspeisekreis eine Reihenschaltung von zwei, über ein Speiseadernpaar miteinander verbundenen Speiseschaltungen vorgesehen ist und eine der Speiseschaltungen eine Prüfstromquelle und die andere einen die beiden Speiseadern verbindenden Überbrückungszweig enthält, wobei bei der Inbetriebnahme der beidseitigen Fernspeisung zunächst mittels der einen Speiseschaltung (S1) ein gegenüber dem Fernspeisestrom ($I_F$) niedrigerer Prüfstrom ($I_T$) in das Speiseadernpaar (17) eingespeist wird, der in der anderen Speiseschaltung über den Überbrückungszweig fliesst und ausgewertet wird und wobei die andere Speiseschaltung eine Konstantstromquelle enthält, die einen Fernspeisestrom an den Fernspeisekreis abgibt, sobald bei der örtlichen Speiseschaltung (S2) im Speiseadernpaar (17) der Prüfstrom ($I_T$) oder wenigstens ein vorgegebener Bruchteil des Prüfstromes ($I_T$) festgestellt wird und wobei der Überbrückungszweig vor einer Speisung des Fernspeisekreises durch die Konstantstromquelle geschlossen und bei speisender örtlicher Konstantstromquelle geöffnet ist, dadurch gekennzeichnet, dass beide Speiseschaltungen (S1, S2) jeweils eine geregelte Konstantstromquelle und jeweils einen Überbrückungszweig enthalten und zunächst Fernspeisestrom ($I_F$) an den eigenen Überbrückungszweig (T13, a1; T23, a2; s5) abgeben und dass daraufhin in der einen Speiseschaltung (S1) die Stromquelle (Q1) vom Fernspeisestrom ($I_F$) auf den Prüfstrom ($I_T$) umgeschaltet und der Überbrückungszweig (T13, a1) geöffnet werden und dass in der den Prüfstrom abgebenden Speiseschaltung (S1) vom Prüfstrom ($I_T$) auf Fernspeisestrom ($I_F$) umgeschaltet wird, sobald bei dieser Speiseschaltung (S1) im Speiseadernpaar wenigstens ein vorgegebener Bruchteil des von der Gegenseite (S2) kommenden Fernspeisestromes ($I_F$) festgestellt wird und dass die Speiseschaltungen (S1, S2) jeweils in den Überbrückungszweigen (T13, a1; T23, a2) einen durch den im Fernspeisekreis fliessenden Strom steuerbaren ersten Schalter (a1, a2) enthalten, dessen Ansprechstromwert für das Schalten wenigstens in der einen Speiseschaltung (S1) in Abhängigkeit von dem von der Stromquelle abgegebenen Strom veränderbar ist, derart, dass in einer ersten Steuerstellung der Prüfstrom ($I_T$) den ersten Schalter (a2) öffnet, und in einer zweiten Steuerstellung der Prüfstrom ($I_T$) den ersten Schalter (a1) nicht öffnet, aber der höhere Fernspeisestrom ($I_F$) den ersten Schalter (a1) öffnet.

2. Verfahren nach Anspruch 1, dadurch gekennzeichnet, dass der Prüfstrom ($I_T$) manuell eingestellt wird und die weiteren Verfahrensschritte selbsttätig ausgelöst werden.

3. Schaltungsanordnung zur Durchführung des Verfahrens nach einem der Ansprüche 1 bis 2, dadurch gekennzeichnet, dass wenigstens eine der Speiseschaltungen (S1, S2) eine für den von der anderen Speisestelle kommenden Gleichstrom durchlässige Diode (d, D1, D2) enthält.

4. Schaltungsanordnung nach Anspruch 3, dadurch gekennzeichnet, dass der Ansprechwert des ersten Schalters (a, a1, a2) wenigstens in einer der Speiseschaltungen (S1, S2) in Abhängigkeit von dem von der Stromquelle (1) abgegebenen Strom derart veränderbar ist, dass er bei abgegebenem Prüfstrom ($I_T$) einen vorgegebenen Bruchteil des Fernspeisestromes ($I_F$) und bei abgegebenem Fernspeisestrom ($I_F$) einem vorgegebenen Bruchteil des Prüfstromes ($I_T$) entspricht.

5. Schaltungsanordnung nach Anspruch 3 oder 4, dadurch gekennzeichnet, dass wenigstens bei einer der Speiseschaltungen (S1, S2) eine Vorrichtung (8) zur Begrenzung der Ausgangsspannung bei Einspeisung des Prüfstromes ($I_T$) und eine Vorrichtung zur Reduktion der Ausgangsspannung bei abgesunkenem Fernspeisestrom vorgesehen sind.

6. Schaltungsanordnung nach Anspruch 3, 4 oder 5, dadurch gekennzeichnet, dass im Überbrückungszweig (15) in Serie zu dem durch den im Fernspeisekreis (17) fliessenden Strom steuerbaren ersten Schalter (a) ein zweiter steuerbarer Schalter (b) angeordnet ist, der durch den von der Strom liefernden örtlichen Stromquelle (Q1, Q2, 1) abgegebenen Strom derart steuerbar ist, dass er bei Strömen, die kleiner oder gleich dem Prüfstrom sind, den Überbrückungszweig (15) unterbricht.

7. Schaltungsanordnung nach Anspruch 5 oder 6, dadurch gekennzeichnet, dass die Vorrichtung (8) zur Begrenzung der Ausgangsspannung (U) parallel zu dem zweiten steuerbaren Schalter (b) liegt.

8. Schaltungsanordnung nach Anspruch 6, dadurch gekennzeichnet, dass der zweite steuerbare Schalter (b) verzögert anspricht.

9. Schaltungsanordnung nach Anspruch 5, dadurch gekennzeichnet, dass bei angesprochenem zweiten steuerbaren Schalter (b) der Ansprechwert des ersten steuerbaren Schalters (a) derart heraufgesetzt wird, dass er erst bei Stromwerten anspricht, die mindestens gleich dem halben Fernspeisestrom ($I_F$) sind.

**Claims**

1. A method of setting in operation the reciprocal remote supply of intermediate stations of a communications transmission technology device, where a series arrangement of two supply circuits connected to the another via a pair of supply lines, is arranged in a remote supply circuit designed for d.c. series feed, one of the supply circuits contains a test current source and the other contains a bridging circuit which connects the two supply lines, where when the reciprocal remote supply is set in operation, firstly by means of the one supply circuit (S1) a test current ($I_T$) lower than the remote feed current ($I_F$) is fed into the pair of supply lines (17), which current flows in the other supply circuit via the bridging arm and is analysed, and where the other supply circuit contains a constant current source which emits a remote feed current to the remote supply circuit as soon as the test current ($I_T$) or at least a predetermined fraction of the current ($I_T$) is established in the pair of supply lines (17) in the local supply circuit (S2), and where the bridging arm is closed before the remote supply circuit is fed by the constant current source and is opened when the local constant current source is feeding, characterised in that the two supply circuits (S1, S2) each contain a regulated constant source and each contain a bridging arm, and firstly emit remote feed current ($I_F$) to their own bridging arm (T13, a1; T23, a2; s5) and that then, in the first supply circuit (S1), the current source (Q1) is switched over from the remote feed current ($I_F$) to the test current ($I_T$) and the bridging arm (T13, a1) is opened, and that in the supply circuit (S1) which emits the test current a switch ever is made from the test current ($I_T$) to the remote feed current ($I_F$) as soon at least a predetermined fraction of the remote feed current ($I_F$) emanating from the opposite side (S2) is established in this supply circuit (S1) in the pair of supply lines, and that the supply circuits (S1, S2) each contain, in the bridging arms (T13, a1; T23, a2), a first switch (a1, a2) controlled by the current flowing in the remote supply circuit and whose response current value for the switching can be changed, at least in the first supply circuit (S1), in dependence upon the current emitted from the current source, in such manner that in a first control position the test current ($I_T$) opens the first switch (a2) and in a second control position the test current ($I_T$) does not open the first switch (a1) but the higher remote feed current ($I_F$) opens the first switch (a1).

2. A method as claimed in Claim 1, characterised in that the test current ($I_T$) is manually adjusted and the other steps are triggered automatically.

3. A circuit arrangement for the execution of the method claimed in one of Claims 1 or 2, characterised in that at least one of the supply circuits (S1, S2) contains a diode (D, D1, D2) permeable to the d.c. emanating from the other supply point.

4. A circuit arrangement as claimed in Claim 3, characterised in that the response value of the first switch (a, a1, a2) can be changed in at least one of the supply circuits (S1, S2), in dependence upon the current emitted by the current source (1), in such manner that when the test current ($I_T$) is emitted it corresponds to a predetermined fraction of the remote feed current ($I_F$) and when the remote feed current ($I_F$) is emitted it corresponds to a predetermined fraction of the test current ($I_T$).

5. A circuit arrangement as claimed in Claim 3 or 4, characterised in that in at least one of the supply circuits (S1, S2) a device (8) is provided which serves to limit the output voltage when the test current ($I_T$) is fed in, and a device is provided which serves to reduce the output voltage when the remote feed current has fallen.

6. A circuit arrangement as claimed in Claim 3, 4 or 5, characterised in that a second switch (b) is arranged in the bridging arm (15), in series with the first switch (a) controlled by the current flowing in the remote supply circuit (17), which second controllable switch (b) is controlled by the current emitted from the local current source (Q1, Q2, 1) in such manner that it interrupts the bridging arm (15) in the case of currents which are smaller than or equal to the test current.

7. A circuit arrangement as claimed in Claim 5 or 6, characterised in that the device (8) which serves to delimit the output voltage (U) is arranged to the second controllable switch (b).

8. A circuit arrangement as claimed in Claim 6, characterised in that the second controllable switch (b) has a delayed response.

9. A circuit arrangement as claimed in Claim 5, characterised in that when the second controllable switch (b) has responded, the response value of the first controllable switch (a) is raised in such manner that it does not respond until current values which are at least equal to half the remote feed current ($I_F$).

**Revendications**

1. Procédé pour la mise en service de l'alimentation bilatérale à distance de postes intermédiaires d'un dispositif de la technique des transmissions d'informations, dans lequel il est prévu dans un circuit d'alimentation à distance agencé pour réaliser l'alimentation en série à courant continu, un circuit série formé de deux circuits d'alimentation reliés entre eux par l'intermédiaire d'un couple de conducteurs d'alimentation, et l'un des circuits d'alimentation contient une source de courant d'essai et l'autre circuit d'alimentation contient une branche de shuntage reliant les deux conducteurs d'alimentation, et selon lequel lors de la mise en service de l'alimentation bilatérale à distance, tout d'abord au moyen de l'un des circuits d'alimentation (S) se trouve introduit, dans le couple de conducteurs d'alimentation (17), un courant d'essai ($I_A$) plus faible que le courant d'alimentation ($I_F$) et qui circule dans l'autre circuit d'alimentation en passant par l'intermédiaire de la branche de shuntage et est évalué, et selon lequel l'autre circuit d'alimentation contient une source de courant constant qui délivre un courant d'alimentation à distance au circuit d'alimentation à distance dès que dans le circuit local l'alimentation (S2), le courant d'essai ($I_A$) ou au moins une fraction prédéterminée du courant d'essai ($I_T$) est déterminée dans le couple de conducteurs d'alimentation (17), et selon lequel la branche de shuntage est fermée avant une alimentation du circuit d'alimentation à distance par la source de courant constant et est ouverte dans le cas d'une alimentation fournie par la source locale de courant constant, caractérisé par le fait que les deux circuits d'alimentation (S1, S2) contiennent chacun une source réglée de courant constant et une branche de shuntage et délivrent tout d'abord le courant d'alimentation à distance ($I_F$) à leur propre branche de shuntage (T13, a1; T23, a2; s5) et qu'ensuite dans l'un des circuits d'alimentation (S1), la source de courant (Q) est commutée du courant d'alimentation à distance ($I_F$) au courant d'essai ($I_T$) et la branche de shuntage (T13, a1) est ouverte et que dans le circuit d'alimentation (S) délivrant le courant d'essai, il se produit une commutation du courant d'essai ($I_T$) au courant d'alimentation à distance (IF) dès que, dans ce circuit d'alimentation (S1), au moins une fraction prédéterminée du courant d'alimentation à distance (IF), arrivant sur le côté opposé (S1), est déterminée dans le couple de conducteurs d'alimentation, et que les circuits d'alimentation (S1, S2) contiennent respectivement dans les branches de shuntage (T13, a1; T23, a2) un premier commutateur (a1, a2) pouvant être commandé par le courant circulant dans le circuit d'alimentation à distance et dont la valeur de courant de réponse pour la commutation peut être modifiée, au moins dans l'un des circuits d'alimentation (S1), en fonction du courant délivré par la source de courant, de telle sorte que dans une première position de commande, le courant d'essai ($I_T$) ouvre le premier commutateur (a2) et que dans une seconde position de commande le courant d'essai ($I_T$) n'ouvre pas le premier commutateur (a1), mais que le courant plus intense d'alimentation à distance ($I_F$) ouvre le premier commutateur (a1).

2. Procédé suivant la revendication 1, caractérisé par le fait que le courant d'essai ($I_T$) est réglé manuellement et que les autres phases du procédé sont déclenchées de façon automatique.

3. Montage pour la mise en œuvre du procédé suivant l'une des revendications 1 et 2, caractérisé par le fait qu'au moins l'un des circuits d'alimentation (S1, S2) contient une diode (D, D1, D2) passante pour le courant continu délivré par l'autre circuit d'alimentation.

4. Montage suivant la revendication 3, caractérisé par le fait que le valeur de réponse du premier commutateur (a, a1, a2) peut être modifiée au moins dans l'un des circuits d'alimentation (S1, S2) en fonction du courant délivré par la source de courant (1) de telle sorte qu'il correspond à une fraction prédéterminée du courant d'alimentation à distance ($I_F$), pour un courant d'essai ($I_F$) délivré, et correspond à une fraction prédéterminée du courant d'essai ($I_R$), pour un courant d'alimentation à distance ($I_F$) délivré.

5. Montage suivant la revendication 3 ou 4, caractérisé par le fait qu'il est prévu au moins dans l'un des circuits d'alimentation (S1, S2), un dispositif (8) servant à limiter la tension de sortie lors de l'injection du courant d'essai ($I_T$) et un dispositif servant à réduire la tension de sortie dans le cas où le courant d'alimentation à distance est réduit.

6. Montage suivant la revendication 3, 4 ou 5, caractérisé par le fait que dans la branche de dérivation (4) se trouve monté, en série avec le premier commutateur (a) pouvant être commandé par le courant circulant dans le circuit d'alimentation à distance (17), un second commutateur (b) pouvant être commandé et qui peut être commandé par le courant délivré par la source locale de courant (Q1, Q2, 1) délivrant le courant, de telle sorte qu'il coupe la branche de shuntage (15) dans le cas de courants qui sont inférieurs ou égaux au courant d'essai.

7. Montage selon la revendication 5 ou 6, caractérisé par le fait que le dispositif (8) servant à limiter la tension de sortie (U) est monté en parallèle sur le second interrupteur (b) susceptible d'être commandé.

8. Montage selon la revendication 6, caractérisé par le fait que le second interrupteur (b) susceptible d'être commandé est à réponse retardée.

9. Montage selon la revendication 5, caractérisé par le fait qu'après la réponse du second interrupteur (b) susceptible d'être commandé, la valeur de réponse du premier interrupteur (a) susceptible d'être commandé est augmentée de telle manière qu'il ne répond que pour des valeurs du courant qui sont au moins égales à la moitié du courant d'alimentation à distance ($I_F$).

FIG 1

FIG 2

FIG 3

9

# FIG 4

# FIG 5